Europäisches Patentamt

European Patent Office

Office européen des brevets

(11) Publication number: **0 456 622 A1**

# EUROPEAN PATENT APPLICATION

(21) Application number: 91830186.2

(51) Int. Cl.5: **A23G 9/02**

(22) Date of filing: 06.05.91

(30) Priority: 08.05.90 IT 4792690

(43) Date of publication of application:
13.11.91 Bulletin 91/46

(84) Designated Contracting States:
AT BE CH DE DK ES FR GB GR LI LU NL SE

(71) Applicant: PERUCCI & C. S.R.L.
Via E. Berlinguer
I-71041 Carapelle (Foggia)(IT)

(72) Inventor: Perrucci, Luigi
c/o PERRUCCI & C. s.r.l., Via E. Berlinguer
F-71041 Carapelle, Foggia(IT)

(74) Representative: Banchetti, Marina et al
c/o Ing. Barzanò & Zanardo Roma S.p.A. Via
Piemonte, 26
I-00187 Roma(IT)

(54) Frozen mixture for preparing ice-creams.

(57) A mixture for preparing ice-creams of the conventional type, which can be stored in the deep-frozen state and comprises the usual ingredients of non-industrial ice-creams, characterized in that it contains water within the range of 30-55% by weight and sugar within the range of 20-55% by weight. In the case of milk-based ice-creams, said mixture also comprises a 10-25% by weight of fats, whereas in the case of fruit-juice ice-creams or sherbets, fats are practically absent.

This invention relates to a deep-frozen mixture for the preparation of ice-creams. More particularly, it relates to an ice-cream mixture that can be stored in the deep-frozen state for a long time before use, and that can then be de-frozen for being treated in the conventional way in an ice-cream making machine.

It is well known that ice-cream is made of a mixture of food products of various kinds and consistency, such as milk, cream, butter, sugar, possibly eggs or fruit, etc., which ingredients are intimately mixed together so as to give the product the maximum possible homogeneity, and then they are subjected to suitable low temperature processing that cause the mixture to freeze while assuming a soft and creamy consistency.

The major component of any ice-cream mixture is water, which is contained in the largest amount in milk, but also in many of the other ingredients employed. Water is responsible for the solidification of the mixture in the freezing process. While sugar and other compounds contained in the starting products are water soluble, fatty compounds are immiscible with water, and have a tendency to separate spontaneously from the mixture, and to go up to the surface thereof, thus rendering the product unstable.

As a matter of fact, the mixtures for the production of ice-cream are unstable oil-in-water emulsions in which the fatty compounds are dispersed as small globules within the water solution formed by the other ingredients. For this reason, in order to obtain a good ice-cream the mixture must be subjected to a sequence of specific operations, and it is also important that the various ingredients are proportioned in such a way as to give a balanced mixture.

The operation of balancing an ice-cream mixture consists in suitably calibrating the amount of total solids contained in the mixture, as well as the amount of sugar and fats, so as to keep said amounts within minimum and maximum limits. An ice-cream of the right consistency and creaminess can be obtained only by respecting such conventional limits of stability, which were set out on the basis of the practical knowledge in the field, and by applying the right working procedure.

Generally, conventional ice-cream producers prepare base mixtures containing the fundamental ingredients in suitable proportions, and then they obtain the various flavours by adding the further element required for each flavour (e.g. cocoa, syrup, hazel-nut paste etc.) or the flavouring agent, essential extract or colouring agent (e.g. vanilla, cynnamon,essential oil of orange, etc.). The three fundamental kinds of base mixtures are the milk-based mixtures, the egg-based mixtures and the water-based mixtures, i.e. the mixtures for sherbets. Of such mixtures, the first ones essentially contain milk (liquid or powdered), various kinds of sugar, and cream or butter, and certainly are the most widespread They are employed for preparing some fruit-flavoured ice-creams, especially with some particular kinds of fruit (such as, for instance, coconut, banana, apricot), and a large portion of the other (non-fruit) kinds of ice-creams (e.g. vanilla, coffeee, nuts, chocolate, and so on).

In egg-based mixtures eggs are added to the composition of milk-based mixtures. Egg-based mixtures are employed for preparing high-quality ice-creams, more particularly the various custard tastes. Lastly, water mixtures mainly contain water, sugar and fruit juices or pulps, and they are adopted preferably for particular kinds of fruit, mainly citrus fruit, strawberries, raspberries, blueberries, etc..

As said before, the complementary ingredients, which serve the purpose of obtaining the various tastes, are added in a second step, taking into account the water, fats and sugar contents thereof, so that the resulting overall composition is comprised within the balance limits set forth by the practical art. As an alternative, some minimum amounts of flavours or essential extracts are added to the composition, thereby not affecting substantially the balance itself.

In order to improve the quality of the product with respect to the above-mentioned problem of the instability of the oil-in-water emulsion, some further additives are generally employed, i.e. thickening agents and emulsifying agents. The first ones are compounds that have the property of making the water phase thicker and gelatinous, so favouring the stability of the suspension of fat globules, whereas the emulsifying agents stabilize the emulsion by decreasing the surface tension at the interface between the water phase and the oil phase.

The technique of formulation of the various recipes for ice-cream mixtures, the balance limits, the water, solids, sugar and fats contents of the most common ingredients, and the production technology of ice-creams are illustrated, for instance, in the book by G. Preti, "Il gelato artigianale italiano", Hoepli, Milano, 1982.

More particularly, in said book there are disclosed the following balance limits for a mixture of a general type: sugars, 14-20%; fats, 5-14%; total solids, 32-42%. In the case of a sherbet, fats will be absent and sugar can reach values of 30-33%, but the total amount of solids is to be kept, as in the previous case, between 32 and 42%. Consequently, the water content in the mixtures normally employed is always between 58% and 68%.

The steps of the usual process for the production of ice-cream are the following: -) dosing the ingredients and mixing the same, -) pasteurizing, -) homogenizing, -) maturing, -) freezing.

As pointed out before, the step of dosing the ingredients is crucial for warranting a product of high quality. The operation of mixing the ingredients is carried out directly in the pasteurizer, in which a stirrer uniformly disperses the ingredients, while the heating of the mixture makes it easier to dissolve the solids in the liquid phase.

Generally milk or water, cream and other liquid ingredients, invert sugar, condensed milk, eggs and glucose are first added into the pasteurizer. As soon as the temperature of 35°C is reached, there are added the other solid products, e.g. sucrose, milk-powder (and possibly cocoa powder), and the stabilizing agents. The solid products are to be added to the liquid portion in the form of "showers", and the temperature of the mixture is to be kept below 40-50°C.

The pasteurization is a heat treatment to which fluid food products are subjected in order to destroy the greatest part of microorganisms without altering the organoleptic features of the product itself.

In the ice-cream production, temperatures and treatment times are directly controlled by the pasteurizing apparatuses, which generally offer two possibilities: high pasteurization, at about 82°C for 2-7 minutes, with rapid cooling to a temperature lower than 5°C, and low pasteurization, at about 65°C for thirty minutes, again with rapid cooling to temperatures below 5°C. It is important that the mixture, during the cooling phase, is not kept for a long time at temperatures between 25 and 40°C, which temperatures favour the restarting of the activity of the bacteria which have not been destroyed by the heat.

As already pointed out above, the pasteurization does not eliminate completely the bacterial activity, and it is nevertheless important to observe strict hygienic measures.

After the pasteurization, the mixture is subjected to the homogenizing step, wherein the dispersion of the fat particles emulsified in the water phase is increased as much as possible by shattering such particles with a mechanical action. A good homogenization is fundamental for an improved consistency and structure of the ice-cream itself and, in addition, for the ice-cream to be more digestible, and for obtaining better properties in view of the further working steps.

Before undergoing the freezing step, the mixture is to be left at rest, so as to obtain the so-called "maturing". Such step consists, in practice, in keeping the mixture at a temperature between 4 and 5°C for some hours, so that the stabilizing agents are allowed to absorb water, while the fat particles are allowed to start a hardening process that will go on during the freezing step till crystallization of the globules.

The mixture can be stored in the maturing vats for no more than 5 days, after which the bacterial activity rises again to inacceptable values, and the product can no longer be employed. It is generally advisable to keep the mixture in the maturing step for no more than 8-12 hours.

Lastly, the freezing step is carried out in the apparatuses which are properly known as ice-cream making machines ("mantecatori"), wherein the mixture is gradually cooled while being continuously stirred. A progressive solidification of the mixture is thereby obtained together with the incorporation of air caused by the stirring action, and this makes the ice-cream soft.

It is important to observe that if the mixture is fed to the ice-cream making machine while it is still warm an ice-cream of coarse structure is obtained, and that a too low temperature is equally to be avoided. As a matter of fact, the temperature of the mixture fed to the freezer must not be lower than 0°C, because at temperatures only slightly lower than this value the mixture already shows the presence of some crystallized water and the ice crystals, once formed, would keep their coarse despite the working carried out in the ice-cream making machine.

From the foregoing it is possible to understand that storing the ice-cream is a critical problem for producers because the mixture cannot be kept at 5°C for a time longer than 5 days and the ice-cream, once deep-frozen, does not maintain its properties of homogeneity and creaminess for a long time.

In particular, if the ice-cream mixture is frozen after the homogenization step or after the maturing step, irregular and coarse ice crystals would be obtained in the freezing step; when de-freezing the mixture,the emulsion would separate and a mixture would be obtained which is no longer homogeneous and thus cannot be employed. Accordingly, it is presently generally acknowledged that it is impossible to store the ice-cream mixture, before processing it into the ice-cream making machine, for more than 5 days, the latter being the maximum time allowed for the permanence in the maturing vats.

In view of this problem, the employment has become widespread of powder preparations and semi-manufactured products that remarkably simplify the operations, but result in products whose quality cannot be compared to that of the traditional products. When employing such preparations, it is sufficient to add some milk or water to obtain a mixture ready for being processed in the ice-cream making machine.

The presence of preserving agents,colouring agents and of other chemical additives in the above-mentioned powder preparations results in the lower quality of the ice-creams obtained.

Accordingly, this invention aims at supplying a mixture for ice-creams which can be stored for a long time in the deep-frozen state without having the drawbacks mentioned above. In addition, such mixture requires, at the very moment of the employment, just a few simple operations and gives, through the conventional processing in the ice-cream making machine, a product whose features are identical with those of the non-stored product. As a matter of fact, the object of the present invention consists in modifying the composition of an ice-cream mixture so that after the normal pasteurization, homogenization and maturing, the product can be frozen without loosing the required homogeneity and without giving rise, once de-frozen and processed in the ice-cream making machine, to a non-creamy final product, full of unpalatable and coarse ice crystals.

Starting from the mixture as it comes from the maturing vats, i.e. a highly homogeneous mixture, and processing it in the ice-cream making machine, the process of water crystallization occurs while the mixture is continuously stirred; the total amount of crystallized water at the end of the process is not larger than 50%, whereas all the water soluble substances are concentrated in the remainder part. Thanks to the homogeneity of the product and to the continuous stirring (in addition to a suitable maturing step), the fat globules remain in a finely dispersed form within the mass without separating, and this makes the ice-cream highly creamy, while the incorporation of air makes it soft.

On the contrary, if the same conventional mixture is frozen instead of being processed in the ice-cream making machine, the freezing process gives rise to ice crystals of much larger size, and when the mixture is brought again to room temperature, the emulsion is no longer himogeneous, and the fat particles separate. It is possible to observe a remarkable increase in the total volume of the mixture when frozen, said increase being due to the formation of coarse-grained ice crystals. Indeed, it is well known that water, differently from the other compounds, increases its volume when solidifying, because of a regular alignment of its molecules in the crystalline structure. This structure occupies a space larger than that occupied by the same molecules in the liquid phase, lacking any order.

According to the present invention, it has been found that if the water content is strongly reduced with respect to the current limits for ice-cream mixtures (as already mentioned above, the normal water content is between 58 and 68%), the phenomenon normally observed during the freezing operation does not occur any more and the mixture freezes without losing its homogeneous character. When a mixture of low water content according to the present invention is de-frozen, it appears perfectly uniform and the emulsion of fats in water is stable. It is then sufficient to add the amount of liquid necessary to bring the mixture to the same water content as the conventional mixtures, and to process the whole mass in the ice-cream making machine, to obtain a product having the same features as those of the expressly-made product.

Accordingly, the present invention specifically provides a homogenized mixture for the preparation of ice-creams, to be stored in the deep-frozen state, containing as base ingredients milk, sugar and butter and/or cream, or sugar, water and fruit juice and/or pulp, said mixture being characterized in that it has a water content between 30 and 55% by weight and a sugar content between 20 and 50% by weight.

The first alternative mentioned clearly refers to milk-based mixtures, or else to egg-based mixtures, provided that the suitable amount of whole eggs or of yolk or of other derived products (such as albumen, powder eggs) is added. The second alternative relates to water-based fruit-flavoured ice-creams or sherbets. In both cases the amount of water in the mixture is remarkably lower than that set forth in the conventional ice-cream making practice, whereas the amount of sugar is higher.

The higher sugar concentrations within the above-mentioned range are employed for water-based, fruit-flavoured ice-creams.

In the case of milk- or of egg-based mixtures, the concentration of fats in the product according to the present invention is between 10 and 25% by weight, whereas, obviously, in the case of fruit-flavouredice-creams of the sherbet kind, fats are absent.

According to a preferred embodiment of the present invention, the mixture (of the milk-based or possibly egg-based kind) has the following concentrations:

| | |
|---|---|
| water | 40-45% |
| sugar | 31-33% |
| fats | 16-18% |

In the compositions mentioned above, milk can comprise one or more of the following ingredients: whole milk, whole milk powder or skimmed milk powder, condensed milk, containing or not sugar and skimmed or not.

As already set forth with reference to mixtures of the conventional type, also the mixtures of the present invention can comprise complementary ingredients that impart them some particular flavour (like cocoa, hazel-nuts, coffee and so on), or essential extracts or flavouring agents (like vanilla), or colouring agents.

Again according to the present invention, a preferred mixture for water-based fruit ice-creams has the following concentrations, by weight:

| | |
|---|---|
| water | 45-55% |
| sugars | 45-55% |

In all kinds of mixtures, the sugar fraction is generally made of one or more of the following ingredients: granulated sugar (sucrose), dextrose, glucose syrup, invert sugar.

The ice-cream mixtures according to the present invention are formulated in the same way as the conventional ones, i.e. by setting forth before all what are the ingredients to be employed, and then balancing their amounts on the basis of the concentrations of sugar, fats and solid matter (or water) in the ingredients themselves, so that the overall concentration of each basic component in the mixture is within the fixed limits.

In practice, the overall composition of the mixtures of the present invention differs from the compositions disclosed, e.g. in the manual cited above , in that the amount of milk to be added (or of water in the case of sherbets) is different (i.e. much lower).

After suitable dosing the mixture is pasteurized, homogenized and matured according to the conventional practice, and then it is deep-frozen. When the mixture is employed, it is sufficient to de-freeze it and to feed it to the ice-cream making machine, adding the amount of milk (or of water in the case of sherbets) which is required for bringing tie composition again to the conventional values. Thereafter, the ice-cream can be processed in the ice-cream making machine as usual.

It has also been observed that a proper homogenization of a low-water content mixture like that of the present invention can be obtained without necessarily employing in the homogenizer the same pressure (80-150 atm) employed for the conventional mixtures. It is sufficient to employ a pressure of 20-60 atm for obtaining the same results with a remarkable power saving.

This invention will be now disclosed, for illustrative purposes, in the following preparation examples.

Example 1

Traditional base mixture

The following table shows the composition of a milk-based mixture of the type usually employed in the non-industrial production of ice-creams.

| Ingredients | Weight (kg) | % concentration of | | |
|---|---|---|---|---|
| | | Sugar | Fats | Water |
| whole milk | 62.3 | - | 3 | 88 |
| condensed milk | 4.2 | 44 | 9 | 26 |
| whole milk powder | 2.5 | - | 26 | 5 |
| butter | 10.9 | - | 85 | 15 |
| granulated sugar | 18.4 | 100 | - | - |
| invert sugar | 1.7 | 70 | - | 30 |
| Total weight, kg | 100 | 21.44 | 12.17 | 57.84 |
| Total weight, % | 100 | 21.44 | 12.17 | 57.84 |

As it can be seen, given the % concentration of water, sugar and fats contained in each of the ingredients (see the three columns on the right-hand in the above table), it is possible to set the relevant amount to be employed in the mixture (second left-hand column) in such a way that the resulting % concentrations are those pointed out in the last line of the table. Such concentrations are proportioned according to the conventional balance rules.

Example 2

Milk-based mixture according to the invention

A mixture similar to that of example 1 but balanced according to the teaching of the present invention is as follows:

| Ingredients | Weight (kg) | % concentration of | | |
|---|---|---|---|---|
| | | Sugar | Fats | Water |
| whole milk | 30.3 | - | 3. | 88 |
| condensed milk | 4.2 | 44 | 9 | 26 |
| whole milk powder | 2.5 | - | 26 | 5 |
| butter | 10.5 | - | 85 | 15 |
| granulated sugar | 18.4 | 100 | - | - |
| invert sugar | 1.7 | 70 | - | 30 |
| Total weight, kg | 68 | 21.44 | 11.21 | 29.68 |
| Total weight, % | 100 | 32 | 17 | 43.65 |

The mixture disclosed above can be directly deep-frozen the homogeneization step and then it can be stored for as long as desired. When the mixture is de-frozen, no inhomogeneities are observed in the product.

For employing the mixture, about 32 kg of milk (equal to the difference between the mixture of the present example and that of example 1) is added to the mixture directly in the ice-cream making machine to obtain again the optimal composition for producing ice-creams.

Ice-creams produced as above showed no difference as regards taste and consistency with respect to the ice-cream obtained directly with the mixture of example 1.

Example 3

Milk-based mixture according to the invention

A different composition for a mixture of the same type of that of example 2 but with a lower concentration of water is as follows:

|  |  | % concentration of | | |
|---|---|---|---|---|
| Ingredients | Weight (kg) | Sugar | Fats | Water |
| whole milk | 12.3 | - | 3 | 88 |
| condensed milk | 4.2 | 44 | 9 | 26 |
| whole milk-powder | 2.5 | - | 26 | 5 |
| butter | 10.9 | - | 85 | 15 |
| granulated sugar | 18.4 | 100 | - | - |
| invert sugar | 1.7 | 70 | - | 30 |
| Total weight, kg | 48 | 21.44 | 10.64 | 14.19 |
| Total weight, % | 100 | 45.6 | 22.6 | 30.18 |

Also in this case an ice-cream was produced as disclosed above, i.e. by first producing and freezing the mixture according to the invention and then de-freezing, adding the required amount of milk and processing in the ice-making machine. The resulting ice-cream, notwithstanding the extremely low water contents of the initial mixture, showed no difference whatsoever from an expressly made non-industrial ice-cream.

Example 4

Base mixture for sherbets according to the invention

An example of a composition for water-based lemon ice-creams is as follows:

| Ingredients | Weight (kg) | % concentration of | | |
| --- | --- | --- | --- | --- |
| | | Sugar | Fats | Water |
| granulated sugar | 18 | 100 | - | - |
| dextrose | 4.5 | 100 | - | - |
| lemon juice | 12 | 8 | - | 92 |
| water | 11 | - | - | 100 |
| Total wt. kg | 45.5 | 23.34 | - | 22.04 |
| Total wt. % | 100 | 51.29 | - | 48 |

The concentrated lemon ice-cream mixture produced according to the above table was frozen and stored as such. After being de-frozen, added with the required amount of water and processed in the ice-cream making machine, the ice-cream did appear exactly as soft and homogeneous as an expressly made ice-cream.

**Claims**

1. A homogenized mixture for the preparation of ice-creams, storable in the deep-frozen state, containing as base ingredients milk, sugar and butter and/or cream, or sugar, water and fruit juice and/or pulp, characterized in that it has a water concentration between 30 and 55% by weight and a sugar concentration between 20 and 55% by weight.

2. Mixture according to claim 1 comprising, in addition, fats at a concentration between 10 and 25% by weight.

3. Mixture according to claim 2, having the following percentage amounts by weight:

   water        40-45%

   sugar        31-33%

   fats         16-18%.

4. Mixture according to one of the preceding claims further comprising eggs and egg-derived products like yolk, albumens, powder-eggs.

5. Mixture according to one of the preceding claims, wherein the milk comprises one or more of the following products: whole milk, whole milk powder, skimmed milk powder, condensed milk with or without sugar, skimmed or not.

6. Mixture according to one of the preceding claims which also comprises complementary and/or flavouring ingredients, essential extracts, colouring agents.

7. Mixture for sherbets according to claim 1, having the following percentage amounts:

|        |        |
|--------|--------|
| water  | 45-55% |
| sugar  | 45-55% |

8. Mixture according to one of the preceding claims wherein sugar comprise one or more of the following products: granulated sugar (sucrose), dextrose, glucose syrup, invert sugar.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | US-A-4 244 977 (MARVIN L. KAHN ET AL.) * column 3, lines 35 - 55 * * column 4, lines 26 - 29 * * column 14, lines 5 - 38 * | 1-2,5-6,8, 4 | A 23 G 9/02 |
| Y | US-A-4 244 976 (MARVIN L. KAHN ET AL.) * abstract; claims 4, 8, 11, 16 * | 4 | |
| Y | DE-A-3 246 069 (UDO PETERSOHN) * claims 1, 7 * | 4 | |
| X | US-A-4 346 120 (ROBERT G. MORLEY ET AL.) * column 5, lines 5 - 21; claims 1-2 * | 1-2,5-6,8 | |
| X | US-A-4 244 981 (JON R. BLAKE) * abstract; claims 1-2 * * column 6, lines 23 - 26 @ column 7, lines 47 - 53 @ column 12, lines 19 - 23 @ column 14, lines 25 - 50 * * column 15, line 26 - column 16, line 13 * | 1-3,6,8 | |
| X | EP-A-0 350 419 (EPISUCRES S.A.) * column 3, line 25 - column 5, line 7 * | 1,6-8 | |

**TECHNICAL FIELDS SEARCHED (Int. Cl.5)**

A 23 G

The present search report has been drawn up for all claims

| Place of search | Date of completion of search | Examiner |
|---|---|---|
| Berlin | 02 August 91 | ALVAREZ Y ALVAREZ C |